# NEUE EUROPÄISCHE PATENTSCHRIFT

(11) **EP 0 206 046 B2**
(45) Veröffentlichungstag und Bekanntmachung des Hinweises auf die Entscheidung über den Einspruch: **27.12.1995**
(45) Hinweis auf die Patenterteilung: 15.01.1992
(21) Anmeldenummer: 86107696.6
(22) Anmeldetag: 05.06.1986
(51) Int. Cl.: H05B 3/82, H05B 3/04, A47J 27/212

(54) **Elektrische Flüssigkeitsheizvorrichtung**
Electrical device for liquids
Appareil électrique pour liquides

(30) Priorität: 07.06.1985 DE 8516749 U; 11.09.1985 DE 8525950 U; 03.12.1985 DE 8534008 U
(43) Veröffentlichungstag der Anmeldung: 30.12.1986
(73) Patentinhaber: ELPAG AG CHUR, CH-7001 Chur (CH)
(72) Erfinder: Bleckmann, Ingo, Dipl.-Ing. Dr. mont., A-5020 Salzburg (AT)
(74) Vertreter: Fritsche, Rainer, Dipl.-Wirtsch.-Ing.

(56) Entgegenhaltungen:
- EP-A- 0 157 277
- AT-C- 196 523
- DE-A- 3 026 545
- DE-U- 1 971 645
- DE-U- 8 408 790
- DE-U-84 370 424
- GB-A- 2 044 590
- GB-A- 2 052 225
- GB-A- 2 052 227
- GB-A- 2 067 879
- GB-B- 1 470 365

## Beschreibung

Die Erfindung betrifft eine elektrische Flüssigkeitsheizvorrichtung entsprechend den Merkmalen des Oberbegriffes des Anspruches 1.

Aus der GB-A 2 044 590 ist eine elektrische Flüssigkeitsheizvorrichtung für einen elektrischen Wasserkessel bekannt geworden, bei der der Kessel in der Nähe seines Bodens eine relative große Öffnung besitzt, welche von einer flanschförmigen Platte überbrückt wird. Die flanschförmige Platte wird mittels einer Spannschraubenanordnung an eine in den Rand der Öffnung eingesetzte Dichtung angedrückt. Durch die Platte sind die Anschlußenden eines doppelschleifenförmig gebogenen Rohrheizkörper hindurchgeführt. Der mittlere Abschnitt des Rohrheizkörpers überbrückt die Anschlußenden. Er ist an die flanschförmige Platte angelötet. An der gegenüberliegenden Stelle der Platte liegt ein Bimetallstreifen an, der bei Überhitzung als Temperaturfühler anspricht.

Der Bimetallfühler muß nun entsprechend justiert werden, und zwar sowohl hinsichtlich seiner Lage als auch hinsichtlich seines Anpreßdruckes an die Außenseite der flanschförmigen Platte, und auch hinsichtlich seines Abstandes zu einem Gegenschalter. Die spannungsführenden Teile, insbesondere der Bimetallstreifen sind nicht geschützt.

Aus der GB-A 2 052 225 ist ein elektrisch beheizter Kessel bekannt, bei dem ebenfalls ein doppelschleifenförmiger Rohrheizkö rper vorgesehen ist, der mit seinem mittleren, geraden Teil die Anschlußenden überbrückt. Bei einer der Ausführungsformen ist dieser Teil unmittelbar an einem plattenförmigen Teil angelötet, der auch die Anschlußenden des Rohrheizkörpers trägt. Von außen ist eine Steuereinheit angesetzt. Die Wärmeleitung zu dieser ist undefiniert und führt über die kalten Anschlußenden des Rohrheizkörpers.

Weiter ist aus der EP-A2-0157277 eine Einrichtung zum Erwärmen von Flüssigkeiten bekannt, bei der gleichfalls ein doppelschleifenförmiger Rohrheizkörper vorgesehen ist. dessen Anschlußenden flüssigkeitsdicht an einem Flansch befestigt sind. In einem Ausführungsbeispiel (Fig. 13) ist dabei ein Abschnitt des Rohrheizkörpers an einen in den Flansch eingelassenen Mittelbolzen hart angelötet und bildet somit eine Wärmebrücke zu einem in dem Mittelbolzen liegenden Begrenzer. Der vielschichtig und kompliziert zusammengesetze Flansch muß dabei eine Öffnung aufweisen, um den als Trockengeschutz ausgebildeten Mittelbolzen nebst Begrenzer aufnehmen zu können.

Aus der GB-A-2 052 227 geht u.a. weiterhin eine Flüssigkeitsheizvorrichtung hervor, bei der der Thermostatschalter in Form eines Bimetallschalters in einer Vertiefung der buchsenartig ausgebildeten Platte eingesetzt ist. Der mittlere Abschnitt des Rohrheizkörpers ist unterhalb der Anschlußenden und einer Erhebung, an der der Bimetallschalter anliegt, an der Vertiefung angebracht.

Eine weitere elektrische Flüssigkeitsheizvorrichtung geht aus der GB-B-1 470 365 hervor, bei der der mittlere Abschnitt an einem nach außen weisenden Vorsprung an der Platte aus Messing angebracht ist. Der Vorsprung dient zur Anlage des Bimetallschalters. Die Platte selbst dichtet zusammen mit zwei Dichtungen die Öffnung im Gefäß ab.

Schließlich geht aus dem DE-U- 1 971 645 eine elektrische Flüssigkeitsheizvorrichtung hervor, bei der der mittlere Abschnitt unterhalb der beiden Anschlußenden an der gut wärmeleitenden Platte angebracht ist. Die Platte weist eine Seite auf, in der der Fühler des Thermostatschalter festgelegt ist.

Der Erfindung liegt nun die Aufgabe zugrunde, eine Flüssigkeitsheizeinrichtung der in Rede stehenden Art so auszubilden, daß das Ansprechen eines serienmäßig hergestellten Thermoschutzhalters auch bei höheren Heizleistungen des Rohrheizkörpers verbessert und ein Durchbrennen des Rohrheizkörpers bei Trockenfallen vermieden wird.

Die Lösung der Aufgabe ergibt sich aus den kennzeichnenden Merkmalen des Hauptanspruches. Die Unteransprüche beschreiben bevorzugte Ausführungsformen.

Die beiliegenden Zeichnunen dienen der weiteren Erläuterung der Erfindung. Es zeigen:

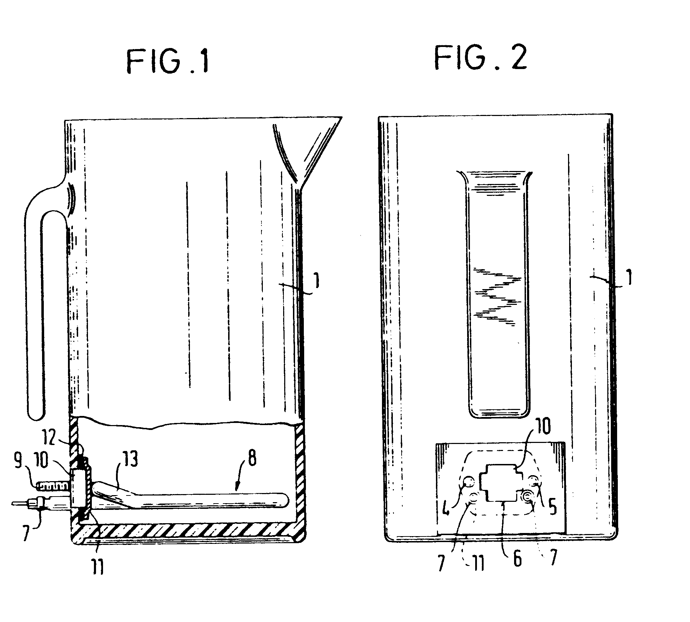

Fig. 1 eine teilweise geschnittene Ansicht einer elektrisch beheizbaren Wasserkanne;
Fig. 2 eine Draufsicht auf den Anschlußteil der Wasserkanne bei abgenommener Schutzkappe und herausgenommenem Thermostatschalter;
Fig. 3 in vergrößertem Maßstab schaubildlich die Rohrheizkörperanordnung mit der sie tragenden Platte;
Fig. 4 eine Draufsicht auf die Rohrheizkörperanordnung gemäß Fig. 3;
Fig. 5 eine Draufsicht auf das Anschlußteil längs der Pfeile V-V in Fig. 3;
Fig. 6 bis 8 in vergrößertem Maßstab Ausschnitte aus Fig. 3 bei unterschiedlicher Höhe der Lötstelle.

Ein Gefäß 1, welches in Form einer Wasserkanne ausgebildet ist, besitzt in der Nähe seines Bodens Öffnungen 2, für den Durchtritt derAnschlußenden 7 eines Rohrheizkörpers 8, Öffnungen 4 und 5 für den Durchtritt von Spannschrauben 9 sowie eine im wesentlichen rechteckig ausgebildete Einsenkung 6 zur Aufnahme eines Thermostatschalters 10.

Der Rohrheizkörper 8 ist doppelt schleifenförmig so gebogen, daß ein mittlerer Abschnitt 13 desselben gerade quer überhalb den Rohrheizkörperanschlußenden 7 verläuft und diese überbrückt. Dieser mittlere Abschnitt 13 ist mit einer Platte 11 aus einer schlecht wärmeleitenden Legierung, vorzugsweise aus einem Chromnickelstahl, verlötet.

Einerseits ist durch die schlechte Wärmeleitfähigkeit der Legierung gewahrleistet, daß der Wärmefluß zu den Rändern der Platte 11 gering bleibt. Dementsprechend kann das Material der Kanne bzw. einer Dichtung 12 nicht durch Überhitzung beschädigt werden.

Andererseits wird verhindert, daß durch einen zu starken Wärmeabfluß unter Berücksichtigung der geringen Wärmekapazität des dünnen Mantelrohres der mittlere Abschnitt 13 auskühlt und nicht genügend Wärme von einer Überhitzungsstelle nachtransportiert wird. Das Ansprechen eines zugeordneten Thermostatschalters erfolgt dementsprechend zuverlässiger, gleichgültig, an welcher Stelle im Rohrheizkörperverlauf eine Überhitzung auftritt.

Die Platte 11 wird mittels Spannschrauben 9, welche durch die Löcher4 und 5 gesteckt werden, bzw. durch nicht dargestellte, auf die Spannschrauben aufgeschraubte Muttern an die ringförmige Gummidichtung 12 angepreßt, wobei die Öffnungen 2 bis 5 von innen her abgedichtet werden. Auf die Spannschrauben 9 kann eine nicht dargestellte Abschlußhaube aufgesetzt werden, welche die elektrischen Zuleitungen und gegebenenfalls einen Schalter aufnimmt.

Ein in die rechteckige Einsenkung 6 in der Platte 11 eingesetzter Thermostatschalter 10, zum Beispiel ein Bimetallschalter, wird von der Einsenkung 6 und von der Gummidichtung 12 in seiner Lage gehalten. Er liegt von außen her an der durch die Lötung des Abschnittes 13 mit der Platte 11 gebildeten Wärmebrücke an, so daß der Rohrheizkörper 8 abgeschaltet wird, wenn der mittlere Abschnitt 13 eine bestimmte Temperatur überschreitet. Da ansonsten die Platte 11 schlecht wärmeleitend ist, ist auf diese Weise sichergestellt, daß der an der Gummidichtung 12 anliegende Rand der Platte 11 keine Temperatur erreicht, durch welche die Gummidichtung 12 oder die Gefäßwand beschädigt werden könnte.

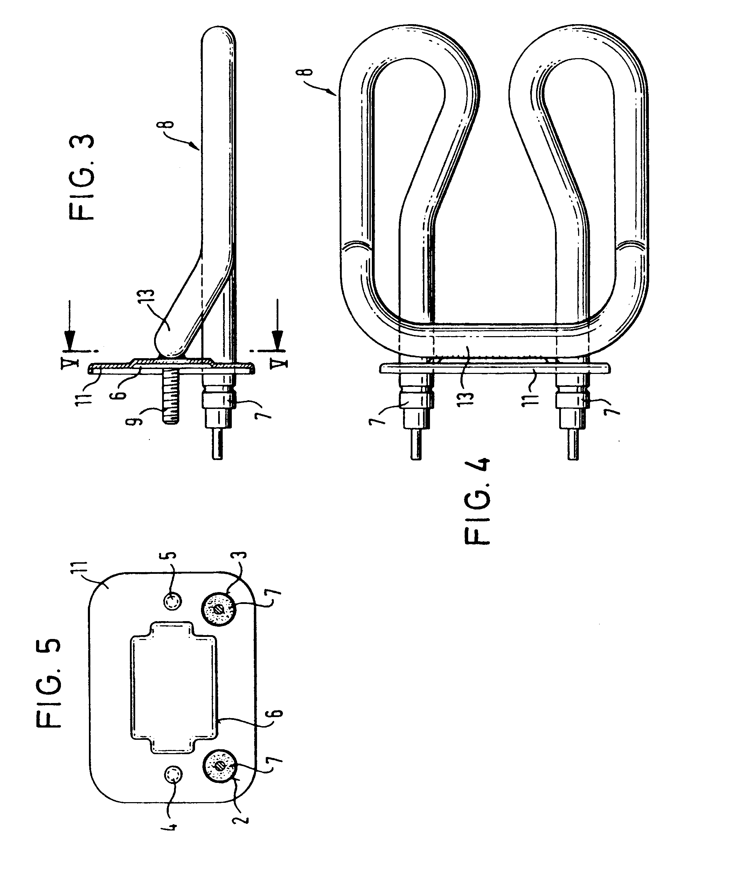

Wie am besten aus Fig. 3 ersichtlich ist, liegt der mittlere Abschnitt 13 des Rohrheizkörpers 8 über den Anschlußenden 7 des Rohrheizkörpers 8. Wenn das Abschalten der Flüssigkeitsvorrichtung vergessen wird und Flüssigkeit verdampft, fällt zuerst der mittlere Abschnitt 13 trocken, wobei durch den Thermostatschalter 10 die Flüssigkeitsheizvorrichtung abgeschaltet wird.

Wie am besten aus Fig. 4 ersichtlich, besitzt die Verlötung des Abschnittes 13 mit der Platte 11 eine Länge etwas über der Hälfte des Abstandes der Achsen der beiden Rohrheizkörperanschlußenden 7, so daß die Wärme aus einem großen Abschnitt des Rohrheizkörpers abgezogen wird. Damit wird gewährleistet, daß durch das Abziehen von Wärme auch unter Berücksichtigung der relativ schlechten Wärmekapazität des aus Chromnickelstahl bestehenden Rohrheizkörpermantels kein stärkerer Temperaturgradient anfällt, der das Ansprechen des Thermoschalters bei Überhitzung des Rohrheizkörpers 8 in Frage stellen könnte.

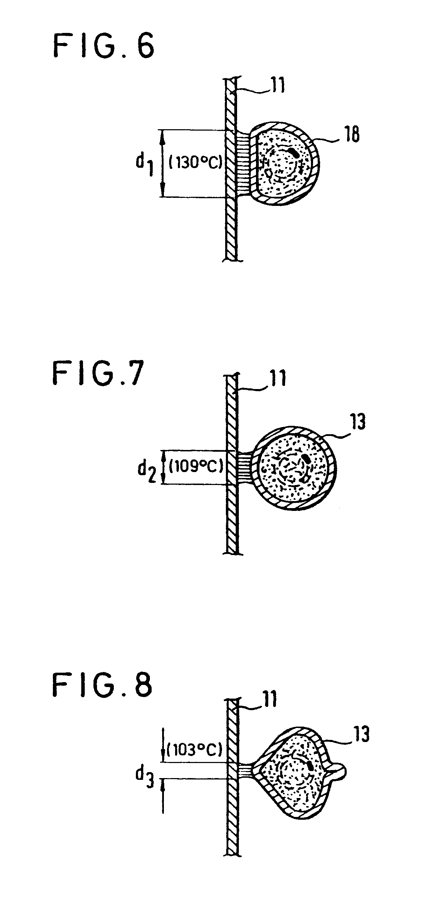

Unter Bezugnahme auf die Fig. 6 bis 8 wird im folgenden der Einfluß der Breite der Lötstelle - also deren Ausdehnung quer zur Rohrheizkörperachse - erläutert. Wenn der Thermostatregler auf eine Ansprechtemperatur von 120°C eingestellt ist und die in axialer Richtung der Rohrheizkörperachse am Abschnitt 13 gemessene Ausdehnung der Lötstelle 20 bis 30 mm beträgt, dann ergibt sich bei einer Breite der Lötstelle d₁ = 8 mm entsprechend Fig. 6 eine Temperatur von 130° C nach der Lötstelle bei Normalbetrieb des Rohrheizkörpers in Wasser. Dies bedeutet. daß der Thermostatschalter 10 zu takten beginnt, d.h. die Stromzufuhr wird periodisch unterbrochen. Die fortwährenden Schaltervorgänge belasten jedoch den Thermostatschalter, so daß die Lebensdauer desselben erheblich verkürzt wird.

Die günstigste Lösung ist in Fig. 7 dargestellt, bei der die Breite oder Höhe der Lötstelle d₂ = 4 mm beträgt. Dabei ergibt sich eine Temperatur nach der Lötstelle von 109° C. Beim Trockenfallen des Rohrheizkörpers, zum Beispiel durch Ausschütten oder Verdampfen des Wassers, ergibt sich eine Ansprechzeit von 18 Sekunden, die günstig ist, da dabei noch keinerlei Überlastungserscheinungen auftreten. Der entgegengesetzte Grenzfall ist in Fig. 8 dargestellt, wobei die Breite bzw. Höhe der Lötstelle d₃ = 2 mm beträgt. Es ergibt sich eine sehr günstige Temperatur im Betrieb von 103° C. Die Ansprechzeit beim Trockenfallen beträgt jedoch bereits 20 Sekunden. Da diese aus Sicherheitsgründen nicht überschritten werden sollte, darf auch die Breite der Lötstelle nicht verringert werden.

Die Oberflächenleistung des Rohrheizkörpers 8 kann dadurch, daß der Thermostatschalter höher liegt, als der übrige Teil des Rohrheizkörpers - abgesehen vom mittleren Abschnitt 13 - auf 20 Watt/cm², vorzugsweise auf 30 Watt/cm², hochgesetztwerden, ohne daß Gefahren auftreten, d.h. bei Verdampfen der Flüssigkeit spricht immer zuerst der Thermostatschalter an, bevor die übrige Rohrheizkörperlänge trockenfällt. Bei dieser Oberflächenbelastung platzt jedoch der ansonsten unvermeidliche Kalkansatz ab.

Bevorzugt wird die Ausbildung der Platte 11 aus einem einheitlichen Material, da derartige Lösungen preiswerter sind. Die Doppelschlaufe des Rohrheizkörper kann auch unsymetrisch sein.

## Patentansprüche

1. Elektrische Flüssigkeitsheizvorrichtung, bei der ein die Flüssigkeit aufnehmendes Gefäß (1) in der Nähe seines Bodens eine Öffnung für den Durchtritt der Anschlußenden (7) eines Rohrheizkörpers (8) besitzt, welcher doppelschleifenförmig so gebogen ist, daß ein mittlerer Abschnitt (13) desselben oberhalb der Anschlußenden (7) des Rohrheizkörpers (8) liegt - und diese überbrückt, und bei derüberdiesen mittleren Abschnitt (13) eine Wärmebrücke zu einem außerhalb des Gefässes (1) liegenden Thermostatschalter (10) gebildet ist, der bei Überschreiten einer bestimmten Temperatur den Rohrheizkörper (8) abschaltet, wobei der mittlere Abschnitt (13) des Rohrheizkörpers (8) über eine Länge, die mindestens einem Drittel der Entfernung der beiden Rohrheizkörperanschlußenden (7) voneinander entspricht, mit einer Platte (11) verschweißt oder verlötet ist, welche über eine Gummidichtung (12) die Öffnung abdichtet, wobei die Platte (11) voneinander getrennte Öffnungen (2-5) für den Durchtritt der Anschlußenden (7) des Rohrheizkörpers (8) besitzt,
dadurch gekennzeichnet,
daß der mittlere Abschnitt (13) gerade ausgebildet ist, daß die Platte auf ihrer Außenseite (11) eine Einsenkung (6) zur Aufnahme des Thermostatschalters (10) besitzt, welche der Kontur des Thermostatschalters (10) angepaßt ist und seitliche Verschiebungen desselben verhindert, daß der Thermostatschalter (10) von der Einsenkung (6) und von der Gummidichtung (12) in seiner Lage gehalten wird, und daß die Platte (11) aus einer schlecht wärmeleitenden Legierung besteht.

2. Flüssigkeitsheizvorrichtung nach Anspruch 1, dadurch gekennzeichnet, daß die schlecht wärmeleitende Legierung ein Chrom-Nickel-Stahl ist.

3. Flüssigkeitsheizvorrichtung nach einem der Ansprüche 1 bis 2, dadurch gekennzeichnet, daß bei einer Länge der Lötstelle zwischen dem gerade verlaufenden Abschnitt (13) des doppelschleifenförmigen Rohrheizkörpers (8) - gemessen in Achsrichtung des Rohrheizkörpers (8) - von 20 bis 30 mm die Höhe der Lötstelle - gemessen quer zur Achsrichtung des Rohrheizkörpers (8) - 2 bis 8 mm, vorzugsweise 3 bis 7 mm, beträgt, wobei in diesem Bereich die Höhe (d₁,d₂,d₃) der Lötstelle so gewählt wird, daß beim Trockenfallen des mittleren Abschnitts (13) der Thermostatschalter (10) innerhalb von 20 Sekunden anspricht, jedoch im Betriebszustand ein taktweises Ansprechen des Thermostatschalters (10) vermieden wird.

4. Flüssigkeitsheizvorrichtung nach einem der Ansprüche 1 bis 3, dadurch gekennzeichnet, daß entsprechend der über den Rohrheizkörperanschlußenden (7) liegenden Anordnung des Thermostatschalters (10) die Oberflächenleistung des Rohrheizkörpers (8) auf 20 Watt/cm², vorzugsweise auf 30 Watt/cm², eingestellt wird, so daß bei dieser Oberflächenbelastung sich an der Rohrheizkörperoberfläche absetzender Kalk abplatzt.

## Claims

1. Electrical device for heating liquids, in which a vessel (1) receiving the liquid is provided in the vicinity of its bottom with an opening for the passage of the connection ends (7) of a tubular heating element (8) which is bent in a double loop configuration in such a manner that a central portion (13) thereof is situated above the connection ends (7) of the tubular heating element (8) and bridges the latter, and in which this central portion (13) forms a thermal bridge to a thermostat switch (10) which is situated outside the vessel (1) and switches off the tubular heating element (8) when a given temperature is exceeded, the central portion (13) of the tubular heating element (8) being welded or soldered over a length corresponding at least to a third of the distance between the two connection ends (7) of the tubular heating element to a plate (11) which seals off the opening (12) via a rubber seal (12), the plate (11) having separate openings (2-5) for the passage of the connection ends (7) of the tubular heating element (8), characterised in that the central portion (13) is straight, that the plate is provided on its outer face (11) with a cavity (6) for receiving the thermostat switch (10), which cavity is adapted to the contours of the thermostat switch (10) and prevents lateral displacement of the latter, that the thermostat switch (10) is held in its position by the cavity (6) and by the rubber seal (12) and that the plate (11) consists of an alloy which is a poor heat conductor.

2. Device for heating liquids according to claim 1, characterised in that the alloy which is a poor heat conductor is a chromium-nickel steel.

3. Device for heating liquids according to one of claims 1 to 2, characterised in that when the length of the solder joint between the straight portion (13) of the tubular heating element (8) in the form of a double loop, as measured in the axial direction of the tubular heating element (8), is 20 to 30 mm, the height of the solder joint as measured transversely to the axial direction of the tubular heating element (8) is 2 to 8 mm, preferably 3 to 7 mm, the height (d₁, d₂, d₃) of the solder joint in this region being selected so that when the central portion (13) runs dry, the thermostat switch (10) responds within 20 seconds, although cyclic response of the thermostat switch (10) in the operating state is prevented.

4. Device for heating liquids according to one of claims 1 to 3, characterised in that, in accordance with the arrangement of the thermostat switch (10) above the connection ends (7) of the tubular heating element, the surface power of the tubular heating element (8) is set at 20 Watt/cm², preferably 30 Watt/cm², so that with this surface loading, lime deposited on the surface of the tubular heating element flakes off.

## Revendications

1. Dispositif de chauffage électrique de liquide, dans lequel un récipient (1) recevant le liquide comporte, au voisinage de son fond, une ouverture pour le passage des extrémités de connexion (7) d'un élément de chauffage tubulaire (8), qui est cintré en forme de double boucle de manière telle qu'une portion centrale (13) de celui-ci soit située au-dessus des extrémités de connexion (7) de l'élément de chauffage tubulaire (8) - et ponte celles-ci, et dans lequel un pont thermique est réalisé par l'intermédiaire de ladite portion centrale (13) en direction d'un thermostat (10) situé à l'extérieurdu récipient (1), lequel thermostat coupe l'élément de chauffage tubulaire (8) lorsque la température dépasse une valeur déterminée, la portion centrale (13) de l'élément de chauffage tubulaire (8) étant, sur une longueur qui correspond au moins au tiers de la distance entre les deux extrémités de connexion (7) de l'élément de chauffage tubulaire, soudée ou brasée sur une plaque (11) qui obture l'ouverture de manière étanche à l'aide d'un joint en caoutchouc (12), la plaque (11) comportant des ouvertures (2 - 5) distinctes pour le passage des extrémités de connexion (7) de l'élément de chauffage tubulaire (8), caractérisé en ce que la portion centrale (13) est rectiligne, en ce que la plaque comporte sur sa face extérieure (11) une creusure (6) pour le montage du thermostat (10), qui est adaptée au contour du thermostat (10) et empêche un déplacement latéral de celui-ci, en ce que le thermostat (10) est maintenu dans sa position par la creusure (6) et par le joint en caoutchouc (12) et en ce que la plaque (11) est réalisée en un alliage mauvais conducteur de la chaleur.

2. Dispositif de chauffage électrique de liquide selon la revendication 1, caractérisé en ce que l'alliage mauvais conducteur de la chaleur est un acier au chrome-nickel.

3. Dispositif de chauffage électrique de liquide selon l'une des revendications 1 à 2, caractérisé en ce que, pour une longueur de la soudure entre la portion rectiligne (13) de l'élément de chauffage tubulaire (8) en double boucle - mesurée dans la direction axiale de l'élément de chauffage tubulaire - de 20 à 30 mm, la hauteur de la soudure - mesurée perpendiculairement à l'axe de l'élément de chauffage tubulaire (8) - est comprise entre 2 et 8 mm, de préférence entre 3 et 7 mm, la hauteur (d1, d2, d3) de la soudure étant choisie dans cette zone de manière telle que le thermostat (10) réagisse en 20 secondes lorsque la portion centrale (13) n'est pas immergée, mais qu'un déclenchement intermittent du thermostat (10) soit évité en fonctionnement.

4. Dispositif de chauffage électrique de liquide selon l'une des revendications 1 à 3, caractérisé en ce que, en accord avec l'agencement du thermostat (10) au-dessus des extrémités de connexion (7) de l'élément de chauffage tubulaire, la puissance par unité de surface de l'élément de chauffage tubulaire (8) est réglée à 20 Watt/cm², de préférence 30 Watt/cm², de manière telle que le calcaire déposé à la surface de l'élément de chauffage tubulaire éclate avec cette sollicitation superficielle.
